# EUROPEAN PATENT APPLICATION

(11) **EP 4 270 065 A1**
(43) Date of publication of application: **01.11.2023**
(21) Application number: 23169573.5
(22) Date of filing: 24.04.2023
(51) Int. Cl.: G02B 5/20, G02B 5/28

(54) **SPECTRAL FILTER, IMAGE SENSOR INCLUDING THE SPECTRAL FILTER, AND ELECTRONIC DEVICE INCLUDING THE SPECTRAL FILTER**

(30) Priority: 29.04.2022 KR 20220053812; 29.11.2022 KR 20220163414
(71) Applicant: Samsung Electronics Co., Ltd., Suwon-si, Gyeonggi-do 16677 (KR)
(72) Inventor: Kim, Hyochul, Suwon-si (KR); Roh, Younggeun, Suwon-si (KR)
(74) Representative: Grünecker Patent- und Rechtsanwälte PartG mbB

(57) **Abstract**

Provided are a spectral filter, and an image sensor and an electronic device each including the spectral filter. The spectral filter includes a plurality of first filter arrays respectively including a plurality of band filters and a plurality of second filter arrays provided on the plurality of first filter arrays. The plurality of unit filters includes a first reflecting plate, a second reflecting plate provided above the first reflecting plate, and a plurality of cavities provided between the first and second reflecting plates and each having central wavelengths of different bands. Each of the plurality of cavities includes a lower cavity layer, a upper cavity layer, and an intermediate light absorption layer provided between the lower cavity layer and the upper cavity layer. Each of the plurality of band filters is configured to transmit light in a specific band, and two or more of the plurality of cavities are configured to have a same effective refractive index.

## Description

### BACKGROUND

### 1. Field

The disclosure relates to a spectral filter, an image sensor including the spectral filter, and an electronic device including the spectral filter.

### 2. Description of the Related Art

Related art image sensors classify wavelength bands into three sections, i.e., red (R), green (G), and blue (B). However, in order to improve color expression accuracy and object recognition performance, an image sensor with a spectral filter configured to divide the wavelength bands into more than the three RGB sections needs to be developed. Related art spectral filters have been used for special-purpose cameras which include bulky and complex optical element parts. Thus, research and development of technologies regarding an image sensor with a spectral filter integrated on a semiconductor chip is ongoing.

### SUMMARY

Provided are a spectral filter, an image sensor including the spectral filter, and an electronic device including the spectral filter.

Additional aspects will be set forth in part in the description which follows and, in part, will be apparent from the description, or may be learned by practice of the presented embodiments of the disclosure.

According to an aspect of the disclosure, there is provided a spectral filter including: a plurality of first filter arrays, each of the plurality of first filter arrays including a plurality of band filters; and a plurality of second filter arrays provided on the plurality of first filter arrays, each of the plurality of second filter arrays including a plurality of unit filters corresponding to the plurality of band filters; wherein the plurality of unit filters may include: a first reflecting plate; a second reflecting plate spaced apart from the first reflecting plate; and a plurality of cavities provided between the first reflecting plate and second reflecting plate, each of the plurality of cavities having central wavelengths of different wavelength bands among a plurality of wavelength bands, wherein each of the plurality of cavities may include a lower cavity layer, a upper cavity layer, and an intermediate light absorption layer provided between the lower cavity layer and the upper cavity layer, wherein each of the plurality of band filters is configured to transmit light in a respective wavelength band, among the plurality of wavelength bands, and wherein two or more of the plurality of cavities are configured to have a same effective refractive index.

Each of the plurality of cavities may be configured to have the central wavelengths of the different wavelength bands in a wavelength range of about 400 nm to about 700 nm.

Each of the plurality of cavities may have a thickness of about 100 nm to about 2,000 nm.

The intermediate light absorption layer may be configured to absorb a specific central wavelength among a plurality of central wavelengths generated by a combination of the lower cavity layer and the upper cavity layer.

The intermediate light absorption layer may be positioned at an intermediate height of each of the plurality of cavities.

The intermediate light absorption layer may include a metal material or a dielectric material configured to absorb light in a visible light band.

The intermediate light absorption layer may have a thickness of about 5 nm to about 80 nm.

At least one of the first filter arrays may include a color filter array or a broadband filter array.

The plurality of cavities may have a same thickness.

Two or more of the plurality of cavities may have a same dielectric pattern.

A channel array having N channels may be configured by combining one or more of the plurality of band filters of one of the first filter arrays and one or more of the plurality of unit filters of one of the second filter arrays, and when a number of band filters of different types is A, a number N' of cavities having different effective refractive indices satisfies N/A ≤N'<N.

Each of the first reflecting plate and the second reflecting plate may include a metal reflecting plate or a Bragg reflecting plate.

Two or more unit filters, among the plurality of unit filters, having a same central wavelength are configured such that effective refractive indices of the plurality of cavities may change according to positions of the two or more unit filters so as to compensate for a central wavelength shift caused by a change in a chief ray angle (CRA) of an incident light.

The spectral filter may include an etch stop layer provided on the intermediate light absorption layer.

According to another aspect of the disclosure, there is provided an image sensor including: a pixel array including a plurality of pixels; and a spectral filter provided on the pixel array, wherein the spectral filter may include: a plurality of first filter arrays, each of the plurality of first filter arrays including a plurality of band filters; and a plurality of second filter arrays provided on the plurality of first filter arrays, each of the plurality of second filter arrays including a plurality of unit filters corresponding to the plurality of band filters; wherein the plurality of unit filters may include: a first reflecting plate; a second reflecting plate spaced apart from the first reflecting plate; and a plurality of cavities provided between the first reflecting plate and the second reflecting plate, each of the plurality of cavities having central wavelengths of different wavelength bands among a plurality of wavelength bands, wherein each of the plurality of cavities may include a lower cavity layer, a upper cavity layer, and an intermediate light absorption layer provided between the lower cavity layer and the upper cavity layer, wherein each of the plurality of band filters is configured to transmit light in a respective wavelength band, among the plurality of wavelength bands, and wherein two or more of the plurality of cavities are configured to have a same effective refractive index.

According to another aspect of the disclosure, there is provided a spectral filter including: a plurality of band filters provided a first layer; and a plurality of unit filters provided on a second layer, the plurality of unit filters corresponding to the plurality of band filters; wherein the plurality of unit filters may include: a first reflecting plate; a second reflecting plate spaced apart from the first reflecting plate; and a plurality of cavities provided between the first reflecting plate and second reflecting plate, each of the plurality of cavities having a first central wavelength of a first wavelength band and a second central wavelength of a second wavelength band, among a plurality of wavelength bands, wherein each of the plurality of cavities may include a lower cavity layer, a upper cavity layer, and an intermediate light absorption layer provided between the lower cavity layer and the upper cavity layer, wherein the plurality of band filters may include: a first band filter configured to transmit light in the first wavelength band, and a second band filter configured to transmit light in the second wavelength band.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a schematic cross-sectional view of an image sensor according to an example embodiment;
FIG. 2 is a plan view of a spectral filter according to an example embodiment;
FIG. 3A is a plan view illustrating a first filter array of the spectral filter shown in FIG. 2;
FIG. 3B is a plan view illustrating a second filter array of the spectral filter shown in FIG. 2;
FIG. 4 is a cross-sectional view of a spectral filter according to an example embodiment;
FIGS. 5A to 5D illustrate an example of dielectric patterns that may be applied to lower cavity layers or upper cavity layers shown in FIG. 4;
FIGS. 6A to 6B illustrate another example of dielectric patterns that may be applied to lower cavity layers or upper cavity layers shown in FIG. 4;
FIG. 7A illustrates a unit filter including a SiO₂ cavity provided between reflecting plates;
FIG. 7B illustrates a unit filter including a SiO₂ cavity lower layer, an intermediate light absorption layer, and a SiO₂ upper cavity layer between the reflecting plates;
FIG. 8 is a simulation result showing a transmission spectrum of the unit filter shown in FIG. 7A and a transmission spectrum of the unit filter shown in FIG. 7B;
FIG. 9 is a simulation result showing transmission spectrums according to a metal material of a reflecting plate in the unit filter shown in FIG. 7B;
FIGS. 10A and 10B illustrate examples of first and second filter arrays that may be applied to a spectral filter according to an example embodiment;
FIG. 11 is a simulation result showing a transmission spectrum of light transmitted through only the second filter array shown in FIG. 10B;
FIG. 12 is a simulation result showing a transmission spectrum of light transmitted through the first and second filter arrays shown in FIGS. 10A and 10B;
FIG. 13 is a cross-sectional view of a spectral filter according to another example embodiment;
FIG. 14 illustrates an example of a broadband filter that may be applied to a first filter array of a spectral filter according to an example embodiment;
FIG. 15 illustrates another example of a broadband filter that may be applied to a first filter array of a spectral filter according to an example embodiment;
FIG. 16 is a cross-sectional view of a spectral filter according to another example embodiment;
FIG. 17 is a cross-sectional view of a spectral filter according to another example embodiment;
FIG. 18 is a cross-sectional view of a spectral filter according to another example embodiment;
FIG. 19 is a plan view illustrating unit filters provided at different positions in a spectral filter according to an example embodiment;
FIG. 20 is a cross-sectional view taken along line II-II' of FIG. 19;
FIG. 21 is a cross-sectional view of a spectral filter according to another example embodiment;
FIG. 22 is a block diagram of an image sensor according to an example embodiment;
FIG. 23 is a schematic block diagram of an electronic device including an image sensor, according to some embodiments;
FIG. 24 is a schematic block diagram of a camera module of FIG. 23;
FIG. 25 is a block diagram showing a schematic structure of a composite camera module including a plurality of image sensors having different attributes; and
FIGS. 26A to 26E and 27A to 27E are diagrams of various examples of an electronic device to which image sensors according to some embodiments are applied.

### DETAILED DESCRIPTION

Reference will now be made in detail to embodiments, examples of which are illustrated in the accompanying drawings, wherein like reference numerals refer to like elements throughout. In this regard, the embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list. For example, the expression, "at least one of a, b, and c" should be understood as including only a, only b, only c, both a and b, both a and c, both b and c, or all of a, b, and c.

Hereinafter, embodiments will be described in detail with reference to the accompanying drawings. Like reference numerals in the drawings denote like elements, and the size of each element in the drawings may be exaggerated for clarity and convenience of description. Meanwhile, embodiments described below are merely examples, and various modifications may be made from these embodiments.

Hereinafter, what is described as "above" or "on" may include those directly on, underneath, left, and right in contact, as well as above, below, left, and right in non-contact. The singular forms are intended to include the plural forms as well, unless the context clearly indicates otherwise. Also, when a part "includes" any element, it means that the part may further include other elements, rather than excluding other elements, unless otherwise stated.

The term "the" and the similar indicative terms may be used in both the singular and the plural. If there is no explicit description of the order of steps constituting a method or no contrary description thereto, these steps may be performed in an appropriate order, and are not limited to the order described.

In addition, the terms "... unit", "module", etc. described herein mean a unit that processes at least one function or operation, may be implemented as hardware or software, or may be implemented as a combination of hardware and software.

Connections of lines or connection members between elements shown in the drawings are illustrative of functional connections and/or physical or circuitry connections, and may be replaced in an actual device, or may be represented as additional various functional connections, physical connections, or circuitry connections.

The use of all examples or example terms is merely for describing the technical concept in detail, and the scope thereof is not limited by these examples or example terms unless limited by claims.

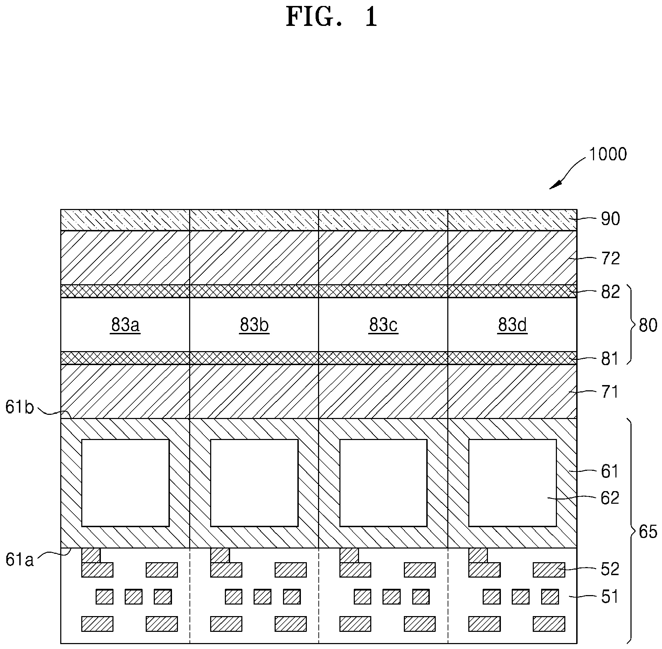

FIG. 1 is a schematic cross-sectional view of an image sensor 1000 according to an example embodiment. The image sensor 1000 of FIG. 1 may include, for example, a complementary metal oxide semiconductor (CMOS) image sensor or a charge-coupled device (CCD) image sensor. However, the disclosure is not limited thereto, and as such, the image sensor 1000 may include other types of image sensors according other example embodiments.

With reference to FIG. 1, the image sensor 1000 may include a pixel array 65 and a resonator structure 80 arranged on the pixel array 65. The pixel array 65 may include a plurality of pixels arranged in a two-dimensional (2D) form, and the resonator structure 80 may include a plurality of resonators arranged in correspondence with the plurality of pixels. FIG. 1 illustrates a case where the pixel array 65 includes four pixels, and the resonator structure 80 includes four resonators.

Each pixel of the pixel array 65 may include a photodiode 62, which is a photoelectric transformation element, and a driver circuit 52 to drive the photodiode 62. According to an example embodiment, the photodiode 62 may be provide in a semiconductor substrate 61. For example, the photodiode 62 may be buried or embedded in a semiconductor substrate 61. The semiconductor substrate 61 may be, for example, a silicon substrate. However, the disclosure is not limited thereto. According to an example embodiment, a wiring layer 51 may be arranged on a lower surface 61a of the semiconductor substrate 61, and the driver circuit 52 may be arranged in the wiring layer 51. According to an example embodiment, the driver circuit 52 may include electronic components, such as a metal oxide silicon field effect transistor (MOSFET).

The resonator structure 80 including a plurality of resonators may be arranged above the semiconductor substrate 61. Each resonator may be arranged to transmit light of a particular desired wavelength region. Each resonator may include a first reflection layer 81 and a second reflection layer 82, which are spaced apart from each other, and cavities 83a, 83b, 83c, and 83d arranged between the first reflection layer 81 and the second reflection layer 82. For example, the first reflection layer 81 is spaced apart from the second reflection layer 82, and a cavity may be provided between the first reflection layer 81 and the second reflection layer 82. The cavities may include a first cavity 83a, a second cavity 83b, a third cavity 83c, and a fourth cavity 83d. Each of the first reflection layer 81 and the second reflection layer 82 may include, for example, a metal reflection layer or a Bragg reflection layer. Each of the first cavity 83a, the second cavity 83b, the third cavity 83c, and the fourth cavity 83d may be arranged to cause resonance of light of a particular desired wavelength region. However, the disclosure is not limited thereto, and as such, according to various example embodiments, a different number of cavities may be provided.

According to an example embodiment, a first functional layer 71 may be arranged between an upper surface 61b of the semiconductor substrate 61 and the resonator structure 80. The first functional layer 71 may improve a transmittance of light passing through the resonator structure 80 and incident towards the photodiode 62. To this end, the first functional layer 71 may include a dielectric layer or a dielectric pattern with adjusted refractive index.

According to an example embodiment, a second functional layer 72 may be arranged on an upper surface of the resonator structure 80. The second functional layer 72 may improve a transmittance of light incident towards the resonator structure 80. To this end, the second functional layer 72 may include a dielectric layer or a dielectric pattern with adjusted refractive index. According to an example embodiment, a third functional layer 90 may be further arranged on an upper surface of the second functional layer 72. The third functional layer 90 may include, for example, an antireflection layer, a condenser lens, a color filter, a short-wavelength absorption filter, a long-wavelength cut-off filter, etc. However, this is only an example.

According to an example embodiment, at least one of the first functional layer 71, the second functional layer 72, and the third functional layer 90 may constitute a spectral filter described below together with the resonator structure 80.

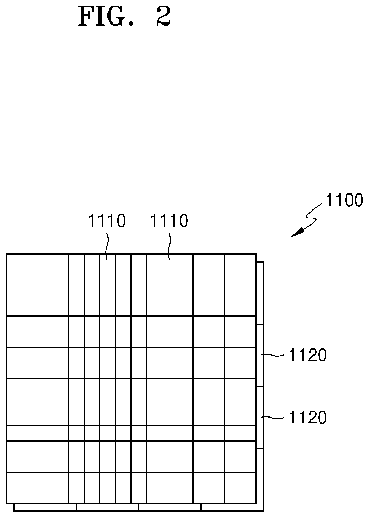

FIG. 2 is a plan view of an example of a spectral filter 1100 according to an example embodiment.

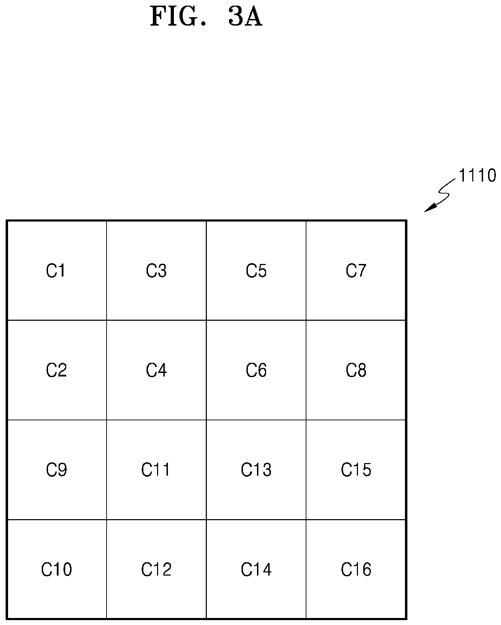

Referring to FIG. 2, the spectral filter 1100 includes a plurality of first filter arrays 1110 and a plurality of second filter arrays 1120. FIG. 2 illustrates an example of 16 first filter arrays 1110 arranged in a 4x4 array and 16 second filter arrays 1120 arranged in a 4x4 array. FIG. 2 illustrates that the plurality of second filter arrays 1120 are respectively provided below the plurality of first filter arrays 1110. However, the disclosure is not limited thereto, and the plurality of second filter arrays 1120 may be respectively provided above the plurality of first filter arrays 1110. FIG. 3A is a plan view illustrating the first filter array 1110 shown in FIG. 2.

Referring to FIG. 3A, the first filter array 1110 may include a plurality of band filters C1 to C16 arranged in a 2D form. FIG. 3A illustrates that the first filter array 1110 includes 16 band filters C1 to C16 arranged in a 4x4 array. However, the disclosure is not limited thereto, and band filters may be arranged in various forms. For example, the first filter array 1110 may include 9 band filters arranged in a 3×3 array.

Each of the band filters C1 to C16 of the first filter array 1110 may transmit light in a specific band. For example, the first filter array 1110 may be a color filter array including a red color filter, a green color filter, and a blue color filter. In this case, the band filters C1 to C16 constituting the first filter array 1110 may be of three types. Specifically, some of the band filters C1 to C16 may be red color filters, others may be green color filters, and others may be blue color filters. The red color filter may transmit red light having a wavelength band of about 600 nm to about 700 nm, the green color filter may transmit green light having a wavelength band of about 500 nm to about 600 nm, and the blue color filter may transmit blue light having a wavelength band of about 400 nm to about 500 nm. For example, a color filter array typically applied to a color display device such as a liquid crystal display device or an organic light-emitting display devices may be used as a color filter array including the red, green and blue color filters. Meanwhile, the first filter array 1110 may be a broadband filter array. In this case, each of the band filters C1 to C16 of the first filter array 1110 may have a full width at half maximum (FWHM) of about 50 nm to about 150 nm.

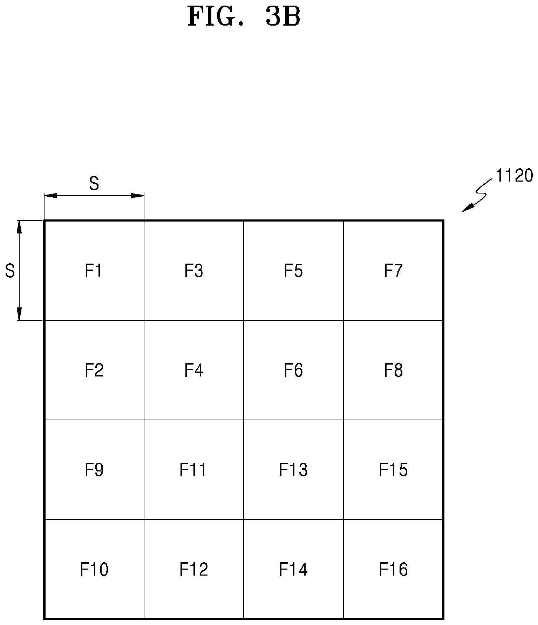

FIG. 3B is a plan view illustrating the second filter array 1120 provided on the first filter array 1110 shown in FIG. 3B.

Referring to FIG. 3B, the second filter array 1120 may include a plurality of unit filters F1 to F16 arranged in a 2D form. Here, the plurality of unit filters F1 to F16 may be provided in a one-to-one correspondence with the plurality of band filters C1 to C16. FIG. 3B illustrates 16 unit filters F1 to F16 in which the second filter array 1120 is arranged in a 4×4 array. However, the disclosure is not limited thereto, and band filters may be arranged in various forms. For example, the second filter array 1120 may include 9 unit filters arranged in a 3×3 array. A size S of each of the unit filters F1 to F16 may be, for example, about 0.4 µm to about 100 µm, but is not limited thereto.

Each of the unit filters F1 to F16 constituting the second filter array 1120 may have central wavelengths of different bands within a visible light wavelength region (e.g., a band of about 400 nm to about 700 nm).

A channel array including 16 channels may be configured by combining the band filters C1 to C16 of the first filter array 1110 shown in FIG. 3A and the unit filters F1 to F16 of the second filter array 1120 shown in FIG. 3B, and lights having different central wavelengths may be output through these channels.

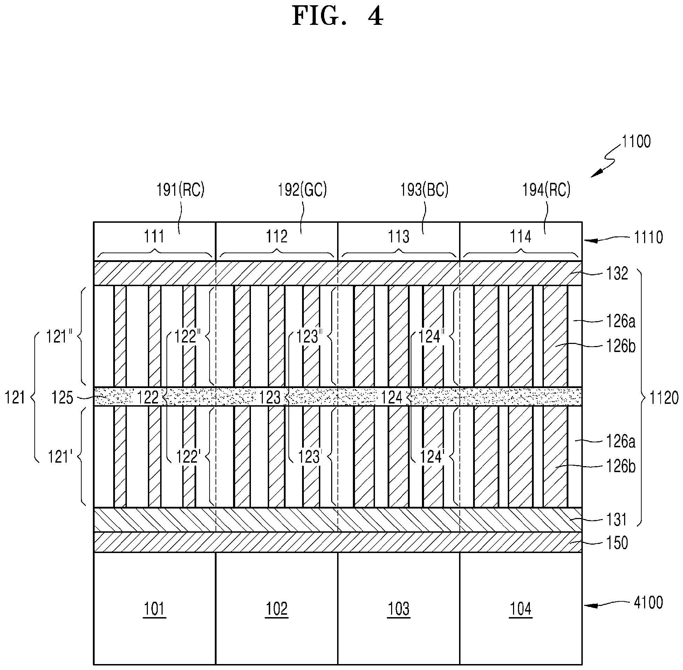

FIG. 4 is a cross-sectional view of the spectral filter 1100 according to an example embodiment.

Referring to FIG. 4, the spectral filter 1100 includes the first filter array 1110 and the second filter array 1120 provided on the first filter array 1110. According to an example embodiment, FIG. 4 illustrates that the second filter array 1120 is provided below the first filter array 1110. However, the disclosure is not limited thereto, and as such, according to another example embodiment, the second filter array 1120 may be provided above the first filter array 1110. According to an example embodiment, the second filter array 1120 and the first filter array 1110 may be adjacent to each other. The first filter array 1110 includes a plurality of band filters 191, 192, 193, and 194 arranged in a 2D form. FIG. 4 illustrates four band filters, including a first band filter 191, a second band filter 192, a third band filter 193, and a fourth band filter 194 constituting the first filter array 1110. The first filter array 1110 may be, for example, a color filter array. FIG. 4 illustrates that the first band filter 191 may be a red (RC) filter, the second band filter 192 may be a green (GC) filter, the third band filter 193 may be a blue (BC) filter, and a fourth band filter 194 may be a red (RC) filter. However, the disclosure is not limited thereto, and as such, according to another example embodiment, the number of band filters, and/or the arrangement of the band filters may be different from the illustration in FIG. 4.

The second filter array 1120 includes a plurality of unit filters 111, 112, 113, and 114 in a one-to-one correspondence with the plurality of band filters 191, 192, 193, and 194. FIG. 4 illustrates four unit filters including a first unit filter 111, a second unit filter 112, a third unit filter 113, and a fourth unit filter 114 constituting the second filter array 1120. However, the disclosure is not limited thereto, and as such, according to another example embodiment, the number of unit filters, and/or the arrangement of the unit filters may be different from the illustration in FIG. 4.

Each of the first unit filter 111, the second unit filter 112, the third unit filter 113, and the fourth unit filter 114 may have central wavelengths of different bands within a visible light region (a wavelength region of about 400 nm to about 700 nm). For example, each of the first, second, third, and fourth unit filters 111, 112, 113, and 114 may have a central wavelength of a red light band, a central wavelength of a green light band, and a central wavelength of a blue light band.

A pixel array 4100 may be provided below the second filter array 1120. The pixel array 4100 includes a plurality of pixels 101, 102, 103, and 104 in a one-to-one correspondence with the plurality of unit filters 111, 112, 113, and 114. FIG. 4 illustrates that the plurality of pixels may include a first pixel 101, a second pixel 102, a third pixel 103, and a fourth pixel 104 constituting the pixel array 4100.

A passivation layer 150 may be provided between the second filter array 1120 and the pixel array 4100. The passivation layer 150 may be provided to protect the pixel array 4100. The passivation layer 150 may include, for example, hafnium oxide, silicon oxide, or silicon nitride, but is not limited thereto.

According to an example embodiment, the first unit filter 111, the second unit filter 112, the third unit filter 113, and the fourth unit filter 114 may include first and second reflecting plates 131 and 132 spaced apart from each other and first, second, third and fourth cavities 121, 122, 123 and 124 provided between the first and second reflecting plates 131 and 132. Here, each of the first and second reflecting plates 131 and 132 may independently include a metal reflecting plate or a Bragg reflecting plate. The metal reflecting plate may include, for example, Al, Ag, Au, Cu, Ti, W or TiN. The Bragg reflecting plate may be a distributed Bragg reflector (DBR) having a structure in which two or more dielectrics having different refractive indices are alternately stacked.

The first and second reflecting plates 131 and 132 may be made of the same material or different materials. For example, the first reflecting plate 131 may include a Bragg reflecting plate, and the second reflecting plate 132 may include a metal reflecting plate. However, this is merely an example.

The first, second, third, and fourth cavities 121, 122, 123, and 124 are provided between the first and second reflecting plates 131 and 132. Here, the first, second, third, and fourth cavities 121, 122, 123, and 124 may all have the same thickness. Each of the cavities 121, 122, 123, and 124 may have central wavelengths of different bands (e.g., a red light band, a green light band, and a blue light band) in a visible light region (a wavelength range of about 400 nm to about 700 nm). To this end, each of the cavities 121, 122, 123, and 124 may have a thickness of about 100 nm to about 2000 nm. For example, each of the cavities 121, 122, 123, and 124 may have a thickness of about 200 nm to about 1000 nm.

The cavities 121, 122, 123, and 124 may respectively include lower cavity layers 121', 122', 123', and 124', upper cavity layers 121", 122", 123", and 124" and an intermediate light absorption layer 125 provided between the lower cavity layers 121', 122', 123', and 124', and the upper cavity layers 121", 122", 123", and 124". Here, the lower cavity layers 121', 122', 123', and 124' and the upper cavity layers 121", 122", 123", and 124" may have substantially the same thickness. For example, according to an example embodiment, the lower cavity layers 121', 122', 123', and 124' and the upper cavity layers 121", 122", 123", and 124" may have the same thickness. Accordingly, the intermediate light absorption layer 125 may be positioned at an intermediate height of the cavities 121, 122, 123, and 124. However, the disclosure is not limited thereto, and as such, according to another example embodiment, he lower cavity layers 121', 122', 123', and 124' and the upper cavity layers 121", 122", 123", and 124" may have different thickness.

According to an example embodiment, the first cavity 121 may include the first lower cavity layer 121', the intermediate light absorption layer 125, and the first upper cavity layer 121", the second cavity 122 may include the second lower cavity layer 122", the intermediate light absorption layer 125, and the second upper cavity layer 122", the third cavity 123 may include the third lower cavity layer 123', the intermediate light absorption layer 125, and the third upper cavity layer 123", and the fourth cavity 124 123 may include the fourth lower cavity layer 124', the intermediate light absorption layer 125, and the fourth upper cavity layer 124".

The cavities 121, 122, 123, and 124 may be configured to have central wavelengths of different bands within a visible light region (e.g., a wavelength region of about 400 nm to about 700 nm). For example, each of the cavities 121, 122, 123, and 124 may have a central wavelength of a red light band, a central wavelength of a green light band, and a central wavelength of a blue light band. However, this is only an example.

The lower cavity layers 121', 122', 123', and 124' and the upper cavity layers 121", 122", 123", and 124" may have the same dielectric pattern. Each of the lower cavity layers 121', 122', 123', and 124' and the upper cavity layers 121", 122", 123", and 124" may include a first dielectric 126a and a second dielectric 126b provided in the first dielectric 126a and forming a pattern. Here, the second dielectric 126b may have a refractive index different from a refractive index of the first dielectric 126a. According to an example embodiment, the first dielectric 126a may include silicon oxide, and the second dielectric 126b may include titanium oxide. However, the disclosure is not limited thereto, and as such, according to another example embodiment, the first dielectric 126a may include other materials. A dielectric pattern may be changed according to the pattern size or the pattern shape of each of the lower cavity layers 121', 122', 123', and 124' and the upper cavity layers 121", 122", 123", and 124", and accordingly, the effective refractive index of each of the cavities 121, 122, 123, and 124 may be adjusted.

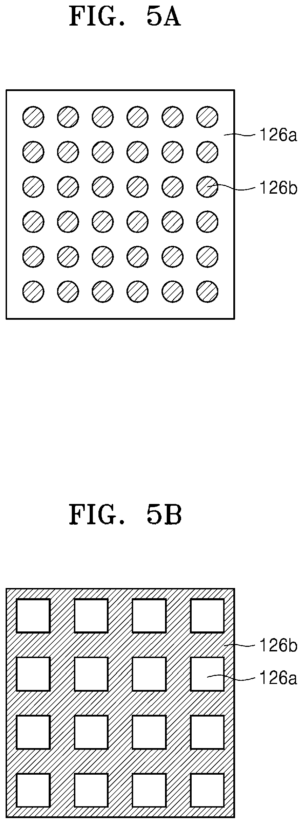

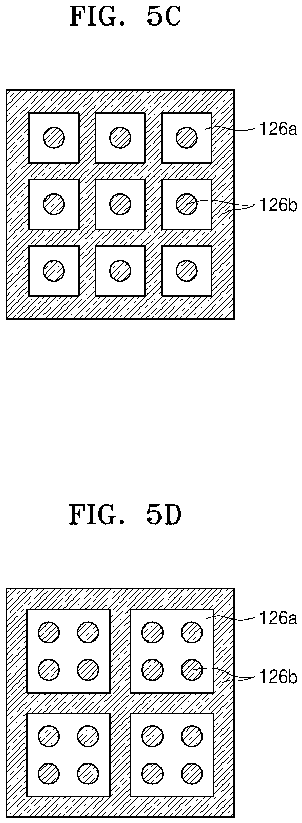

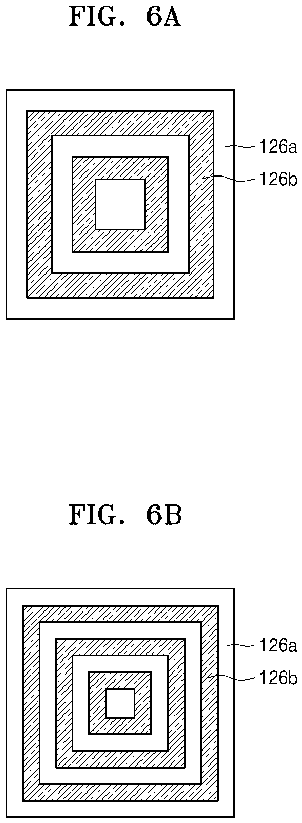

FIGS. 5A to 5D illustrate dielectric patterns that may be applied to the lower cavity layers 121', 122', 123', and 124' and the upper cavity layers 121", 122", 123", and 124" shown in FIG. 4. In addition, FIGS. 6A to 6B illustrate other dielectric patterns that may be applied to the lower cavity layers 121', 122', 123', and 124' and the upper cavity layers 121", 122", 123", and 124" shown in FIG. 4.

The lower cavity layers 121', 122', 123', and 124' and the upper cavity layers 121", 122", 123", and 124" thereon may have substantially the same effective refractive index by having the same dielectric pattern. For example, the effective refractive indices of the lower cavity layers 121', 122', 123', and 124' and the effective refractive indices of the upper cavity layers 121", 122", 123", and 124" may have a difference within about 10 %.

The lower cavity layers 121', 122', 123', and 124' and the upper cavity layers 121", 122", 123", and 124" thereon may have substantially the same thickness. For example, the thicknesses of the lower cavity layer 121', 122', 123', and 124' and the thicknesses of the upper cavity layer 121", 122", 123", and 124" may have a difference within about 10 %.

The intermediate light absorption layer 125 provided between the lower cavity layer 121', 122', 123', and 124' and the upper cavity layer 121", 122", 123", and 124" may be configured to absorb and remove a specific central wavelength. Specifically, the intermediate light absorption layer 125 may absorb and remove a specific central wavelength of two or more layers generated by a combination of the lower cavity layers 121', 122', 123', and 124' and the upper cavity layers 121", 122", 123", and 124".

The intermediate light absorption layer 125 may have a thickness of about 5 nm to about 80 nm. However, the disclosure is not limited thereto. The intermediate light absorption layer 125 may include, for example, a metal material including Ag, Au, Al, W, Ti, or TiN. In addition, the intermediate light absorption layer 125 may include a dielectric material (e.g., Si) having a high light absorption rate of a visible light band.

Each of the cavities 121, 122, 123, and 124 may have central wavelengths within different bands based on the intermediate light absorption layer 125, and may have one central wavelength for each band. For example, each of the cavities 121, 122, 123, and 124 may have three central wavelengths, that is, a central wavelength of a red light band, a central wavelength of a green light band, and a central wavelength of a blue light band.

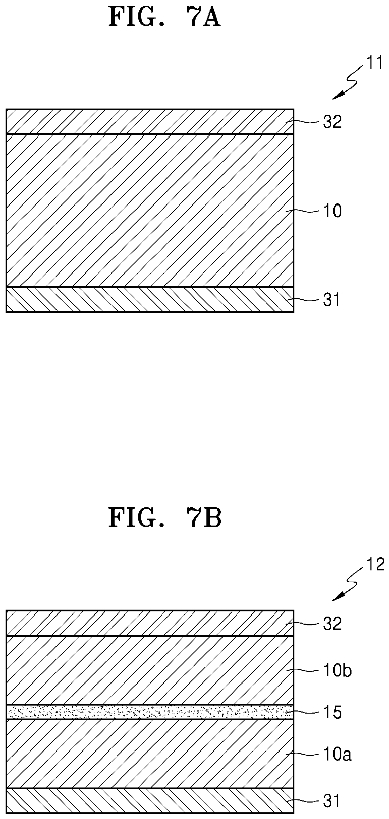

FIG. 7A illustrates a unit filter 11 including a SiOz cavity 10 provided between reflecting plates 31 and 32, and FIG. 7B illustrates a unit filter 12 including a SiO₂ lower cavity layer 10a, an intermediate light absorption layer 15, and a SiO₂ upper cavity layer 10b between the reflecting plates 31 and 32. The sum of thicknesses of the SiO₂ lower cavity layer 10a and the SiO₂ upper cavity layer 10b shown in FIG. 7B is the same as the thickness of the SiO₂ cavity 10 shown in FIG. 7A.

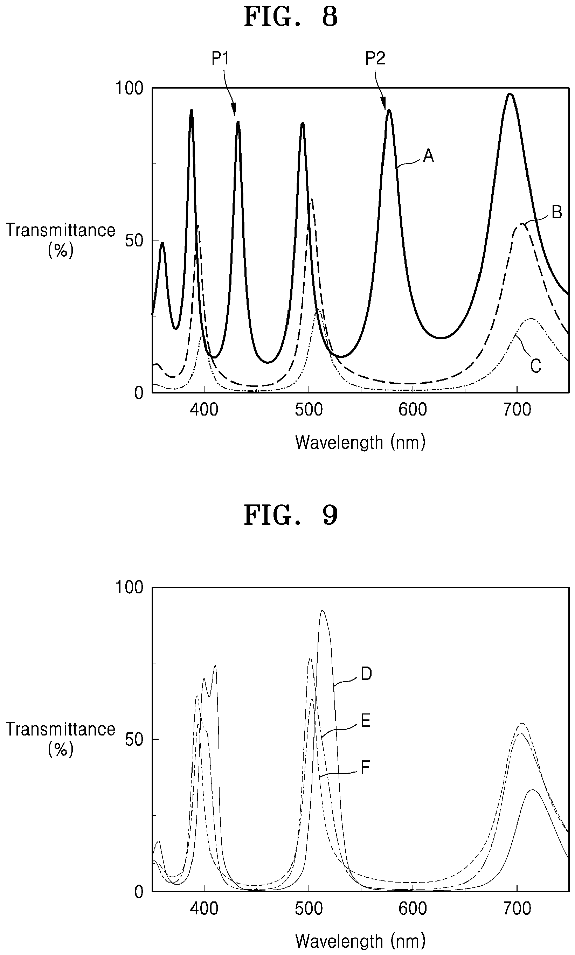

FIG. 8 illustrates transmission spectrums of the unit filter 11 shown in FIG. 7A and transmission spectrums of the unit filter 12 shown in FIG. 7B. Here, "A" represents the transmission spectrum of the unit filter 11 shown in FIG. 7A, and "B" and "C" represent the transmission spectrums of the unit filter 12 shown in FIG. 7B. Moreover, "B" indicates a case where Ti having a thickness of 20 nm is used as the intermediate light absorption layer 15, and "C" indicates a case where Ti having a thickness of 40 nm is used as the intermediate light absorption layer 15.

Referring to FIG. 8, the unit filter 11 shown in FIG. 7A has different central wavelengths in a wavelength band of about 400 nm to about 700 nm, and the unit filter 12 shown in FIG. 7B has central wavelengths excluding central wavelengths of P1 and P2 among central wavelengths of the unit filter 11 shown in FIG. 7A. It may be seen from this that, in the unit filter 12 shown in FIG. 7B, the intermediate light absorption layer 15 provided between the SiO₂ lower cavity layer 10a and the SiO₂ upper cavity layer 10b has absorbed and removed the central wavelengths of P1 and P2 of the unit filter 11 shown in FIG. 7A. In addition, it may be seen that the unit filter 12 shown in FIG. 7B has a central wavelength of a red light band, a central wavelength of a green light band, and a central wavelength of a blue light band.

FIG. 9 illustrates transmission spectrums according to a material of the intermediate light absorption layer 15 in the unit filter 12 shown in FIG. 7B. In FIG. 9, "D" indicates a case where Ag of a thickness of 40 nm is used as the intermediate light absorption layer 15, "E" indicates a case where Al of a thickness of 12 nm is used as the intermediate light absorption layer 15, and "F" indicates a case where Ti of a thickness of 20 nm is used as the intermediate light absorption layer 15.

In the spectral filter 1100 according to an example embodiment, each of the band filters 191, 192, 193, and 194 of the first filter array 1110 may transmit light in a specific band, and each of the unit filters 111, 112, 113, and 114 of the second filter array 1120 may have central wavelengths of different bands. Accordingly, channels including a combination of the band filters 191, 192, 193, and 194 and the unit filters 111, 112, 113, and 114 may have different central wavelengths in a one-to-one correspondence with channels in the wavelength band of about 400 nm to about 700 nm. For example, in a case where each of the unit filters 111, 112, 113, and 114 has a central wavelength of a red light band, a central wavelength of a green light band, and a central wavelength of a blue light band, when the first band filter 191 which is a red color filter RC is provided above the first unit filter 111, a first channel including a combination of the first band filter 191 and the first unit filter 111 may have the central wavelength of the red light band. In addition, when the second band filter 192 which is a green color filter GC is provided above the second unit filter 112, a second channel including a combination of the second band filter 192 and the second unit filter 112 may have the central wavelength of the green light band. In addition, when the third band filter 193 which is a blue color filter BC is provided above the third unit filter 113, a third channel including a combination of the third band filter 193 and the third unit filter 113 may have the central wavelength of the blue light band.

Two or more of cavities of the unit filters (e.g., F1 to F16 of FIG. 3B) constituting the second filter array 1120 may be configured to have the same effective refractive index according to types of the band filters (e.g., C1 to C16 in FIG. 3A) constituting the first filter array 1110. Specifically, two or more of the cavities of the unit filters F1 to F16 may be configured to have the same dielectric pattern. For example, when the first filter array 1110 is configured as a color filter array, and each cavity of the second filter array 1120 has a central wavelength of a red light band, a central wavelength of a green light band, and a central wavelength of a blue light band, three cavities may be configured to have the same dielectric pattern and have different central wavelengths.

More specifically, a channel array having N channels (e.g., 16 channels) may be configured by combining the band filters (e.g., C1 to C16) of the first filter array 1110 and the unit filters (e.g., F1 to F16) of the second filter array 1120. Here, when the number of types of band filters is A, number N' of cavities having different effective refractive indices may satisfy N/A ≤N'<N. For example, when a channel array has 16 channels and the number of types of band filters is 3, the number of cavities having different effective refractive indices (i.e., different dielectric patterns) may be equal to or greater than 6 and equal to or smaller than 15.

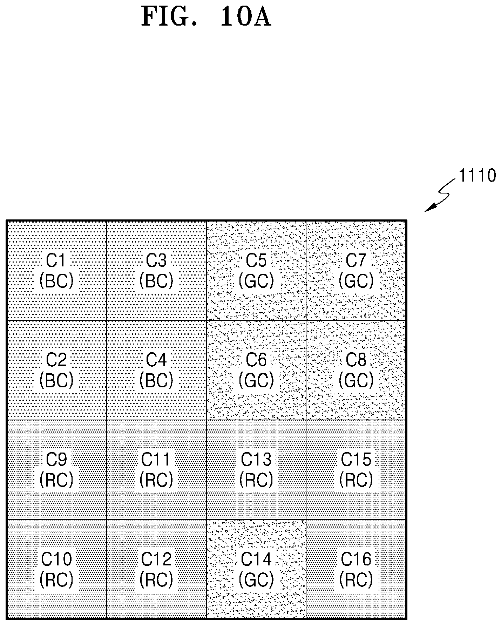

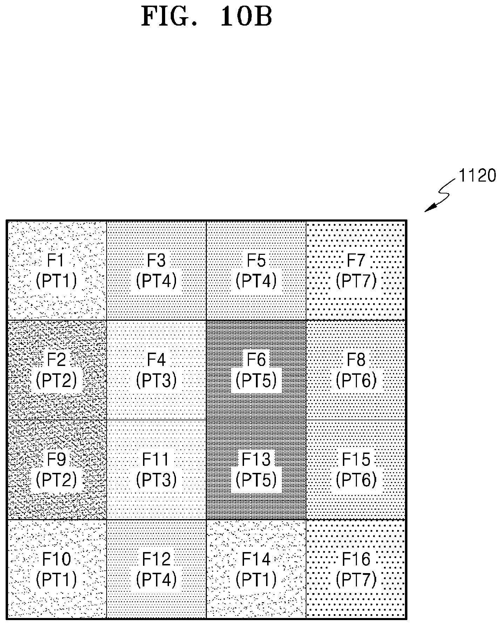

FIGS. 10A and 10B illustrate examples of the first and second filter arrays 1110 and 1120 that may be applied to a spectral filter according to an example embodiment.

FIG. 10A illustrates a color filter array as an example of the first filter array 1110. Referring to FIG. 10A, each of the band filters C1 to C4 uses the blue color filter BC, each of the band filters C5 to C8 and C14 uses the green color filter GC, and each of the band filters C9 to C13 and C15 to C16 uses the red color filter RC.

An example of the second filter array 1120 is shown in FIG. 10B. Referring to FIG. 10B, the second filter array 1120 includes the 16 unit filters F1 to F16 including 7 different dielectric patterns PT1 to PT7. Specifically, cavities of the unit filters F1, F10, and F14 have the first dielectric pattern PT1, cavities of the unit filters F2 and F9 have the second dielectric pattern PT2, cavities of the unit filters F4 and F11 have the third dielectric pattern PT3, cavities of the unit filters F3, F5, and F12 have the fourth dielectric pattern PT4, cavities of the unit filters F6 and F13 have the fifth dielectric pattern PT5, cavities of the unit filters F8 and F15 have the sixth dielectric pattern PT6, and cavities of the unit filters F7 and F16 have the seventh dielectric pattern PT7.

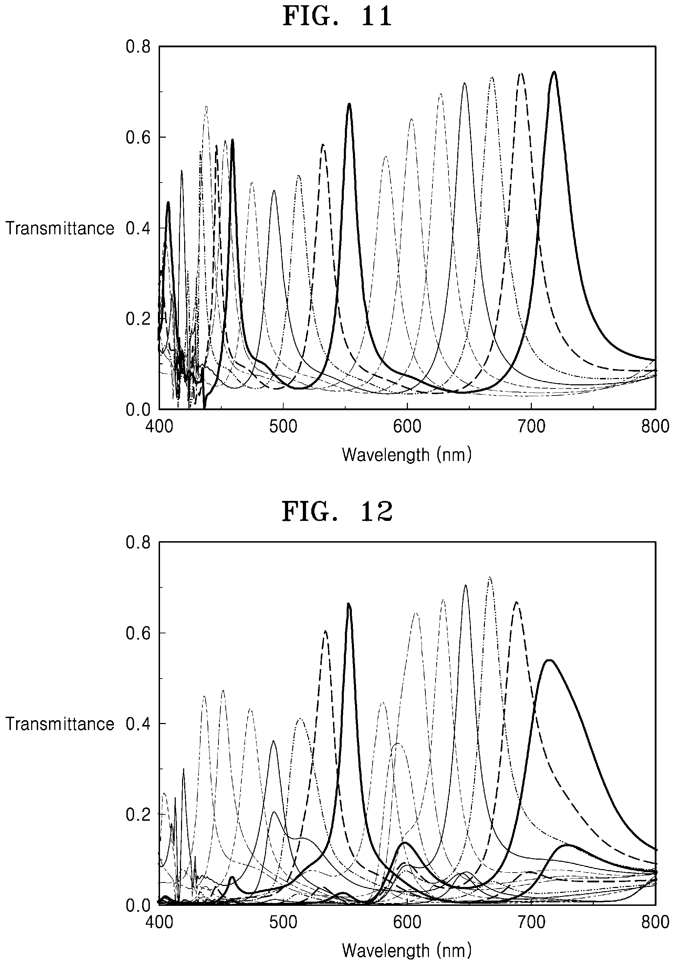

FIG. 11 is a simulation result showing a transmission spectrum of light transmitted through only the second filter array 1120 shown in FIG. 10B. FIG. 12 is a simulation result showing a transmission spectrum of light transmitted through the first and second filter arrays 1110 and 1120 shown in FIGS. 10A and 10B.

Referring to FIGS. 11 and 12, it may be seen that even when some of the unit filters F1 to F16 constituting the second filter array 1120 have the same dielectric pattern, 16 different central wavelengths may be implemented by arranging the first filter array 1110 including the band filters C1 to C16 above the second filter array 1120.

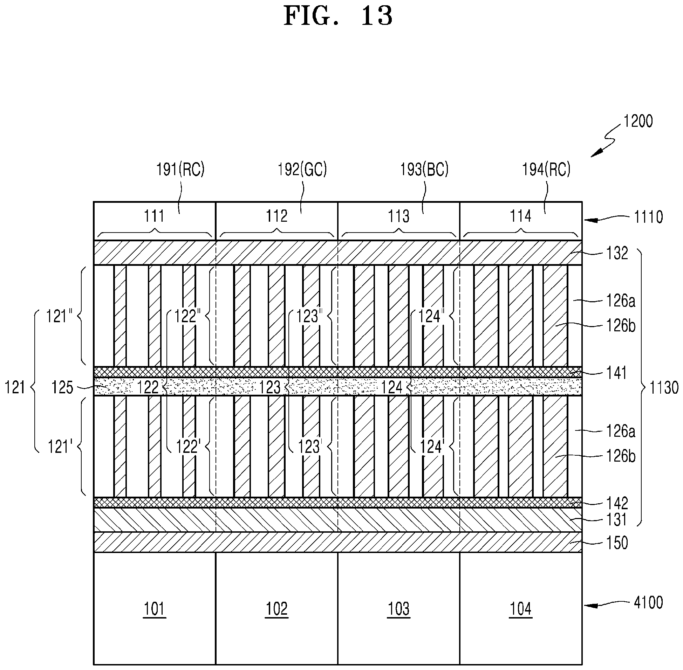

FIG. 13 is a cross-sectional view of a spectral filter 1200 according to another example embodiment. The spectral filter 1200 shown in FIG. 13 is the same as the spectral filter 1100 shown in FIG. 4 except that the second filter array 1130 further includes etch stop layers 141 and 142.

Referring to FIG. 13, the first etch stop layer 141 may be provided between the intermediate light absorption layer 125 and the upper cavity layers 121", 122", 123", and 124". The first etch stop layer 141 may serve to facilitate a patterning process for forming the upper cavity layers 121", 122", 123", and 124". The first etch stop layer 141 may have a thickness of, for example, about 5 nm to about 100 nm, but is not limited thereto.

The first etch stop layer 141 may include, for example, titanium oxide or hafnium oxide, but is not limited thereto. The first etch stop layer 141 may include a material having an etch rate twice or more (e.g., 5 times or more) slower than that of dielectric materials constituting the upper cavity layers 121", 122", 123", and 124". As a specific example, when the upper cavity layers 121", 122", 123", and 124" include silicon oxide, the first etch stop layer 141 may include hafnium oxide. The second etch stop layer 142 may be further provided between the first reflecting plate 131 and the lower cavity layers 121', 122', 123', and 124'. The second etch stop layer 142 may serve to facilitate a patterning process for forming the lower cavity layers 121', 122', 123', and 124'.

In the example embodiments described above, an example in which the first filter array 1110 is a color filter array has been described. However, the disclosure is not limited thereto, and the first filter array 1110 may be a wideband filter array including a plurality of wideband filters that transmit light in different bands. Here, each broadband filter may have a FWHM of about 50 nm to about 150 nm. However, the disclosure is not necessarily limited thereto.

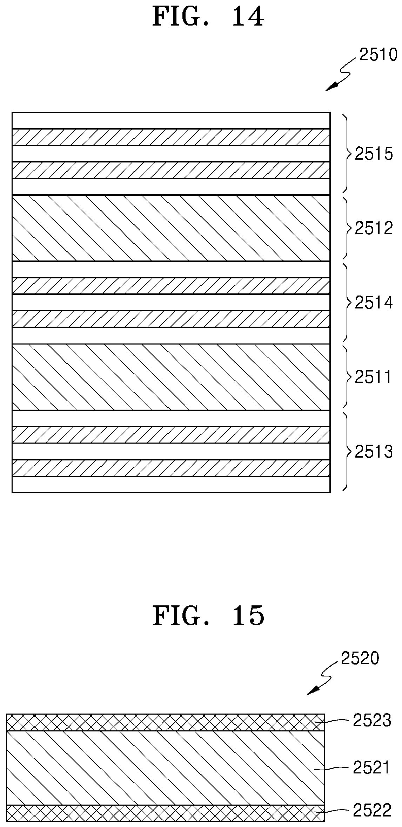

FIG. 14 illustrates an example of a broadband filter 2510 that may be applied to the first filter array 1110 of a spectral filter according to an example embodiment.

Referring to FIG. 14, the broadband filter 2510 may include a plurality of reflective layers 2513, 2514, and 2515 spaced apart from each other, and a plurality of cavities 2511 and 2512 provided between the reflective layers 2513, 2514, and 2515. Although, the three reflective layers 2513, 2514, and 2515 and the two cavities 2511 and 2512 are shown according to the example embodiment in FIG. 14, but the number of reflective layers 2513, 2514, 2515 and the cavities 2511 and 2512 may be modified in various ways according to other example embodiments.

Each of the reflective layers 2513, 2514, and 2515 may be a distributed Bragg reflector (DBR). Each of the reflective layers 2513, 2514, and 2515 may have a structure in which a plurality of material layers having different refractive indices are alternately stacked. Also, each of the cavities 2511 and 2512 may include a material having a certain refractive index or two or more materials having different refractive indices.

FIG. 15 illustrates another example of a broadband filter 2520 that may be applied to the first filter array 1110 of a spectral filter according to an example embodiment.

Referring to FIG. 15, the broadband filter 2520 may include two metal mirror layers 2522 and 2523 spaced apart from each other, and a cavity 2521 provided between the metal mirror layers 2522 and 2523.

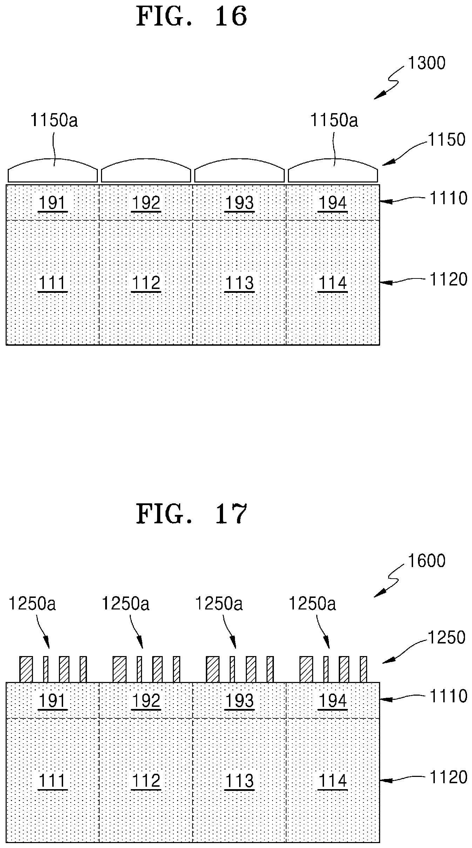

FIG. 16 is a cross-sectional view of a spectral filter 1300 according to another example embodiment.

Referring to FIG. 16, a micro lens array 1150 is provided on the first and second filter arrays 1110 and 1120. For example, the micro lens array 1150 may be provided above the first and second filter arrays 1110 and 1120. The first and second filter arrays 1110 and 1120 have been described above, and thus, descriptions thereof are omitted. FIG. 16 illustrates that the second filter array 1120 is provided below the first filter array 1110, but the second filter array 1120 may be provided above the first filter array 1110.

The micro lens array 1150 may include a plurality of micro lenses 1150a respectively corresponding to the band filters 191, 192, 193, and 194 of the first filter array 1110. Here, the micro lenses 1150a may respectively serve to focus external light to the corresponding band filters 191, 192, 193, and 194 to be incident thereto.

FIG. 16 illustrates that the micro lenses 1150a are provided in a one-to-one correspondence with the band filters 191, 192, 193, and 194, but this is an example, and two or more of the band filters 191, 192, 193, and 194 may correspond to one of the micro lens 1150a.

FIG. 17 is a cross-sectional view of a spectral filter 1600 according to another example embodiment.

Referring to FIG. 17, a nano pattern array 1250 is provided above the first and second filter arrays 1110 and 1120. Nano patterns 1250a may respectively serve to focus external light to the corresponding band filters 191, 192, 193, and 194 to be incident thereto. FIG. 17 illustrates that the nano patterns 1250a are provided in a one-to-one correspondence with the band filters 191, 192, 193, and 194, but this is an example, and two or more of the band filters 191, 192, 193, and 194 may correspond to one of the nano patterns 1250a. The present embodiment may be applied in the same manner when the second filter array 1120 is provided below the first filter array 1110 as well as when the second filter array 1120 is provided above the first filter array 1110.

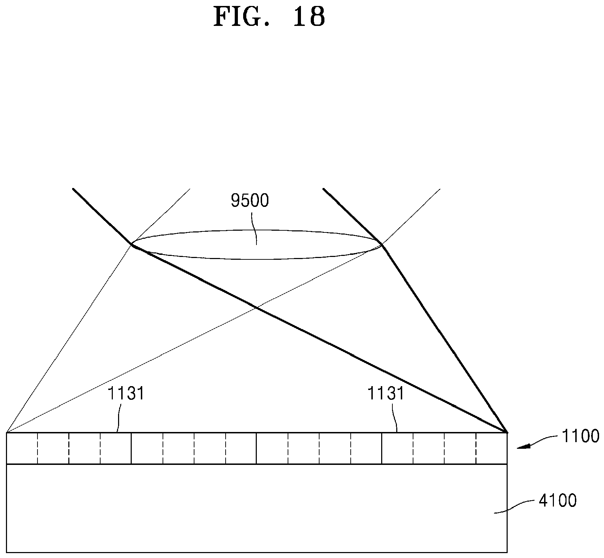

FIG. 18 illustrates an image sensor according to another example embodiment.

Referring to FIG. 18, the spectral filter 1100 is provided on a pixel array 4100, and a single imaging lens 9500 is provided above the spectral filter 1100. Here, the spectral filter 1100 may include a plurality of channels 1131. As described above, the plurality of channels 1131 may be configured by a combination of the band filters 191, 192, 193, and 194 of the first filter array 1110 and the unit filters 111, 112, 113, and 114 of the second filter array 1120.

In this way, the single imaging lens 9500 for forming an image of an object may be provided above the spectral filter 1100, and thus, a camera capable of obtaining a spectral image may be implemented with a simple optical system.

Hereinafter, a spectral filter according to an example embodiment that may compensate for a central wavelength shift caused by a change in a chief ray angle (CRA) of an incident light by changing the effective refractive index of the cavity according to the position of the unit filter of the second filter array is provided.

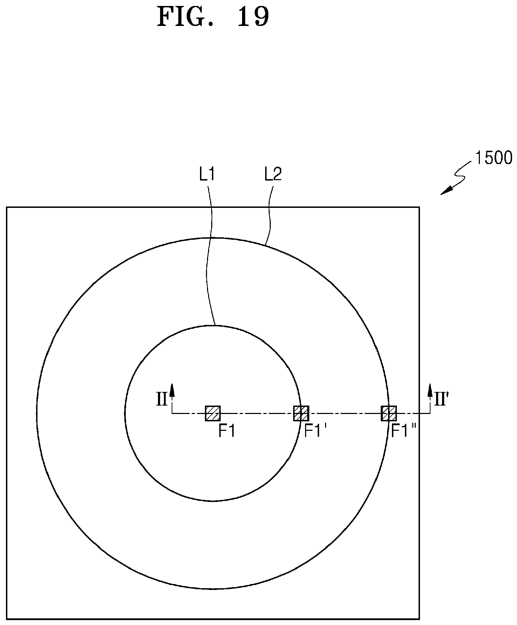

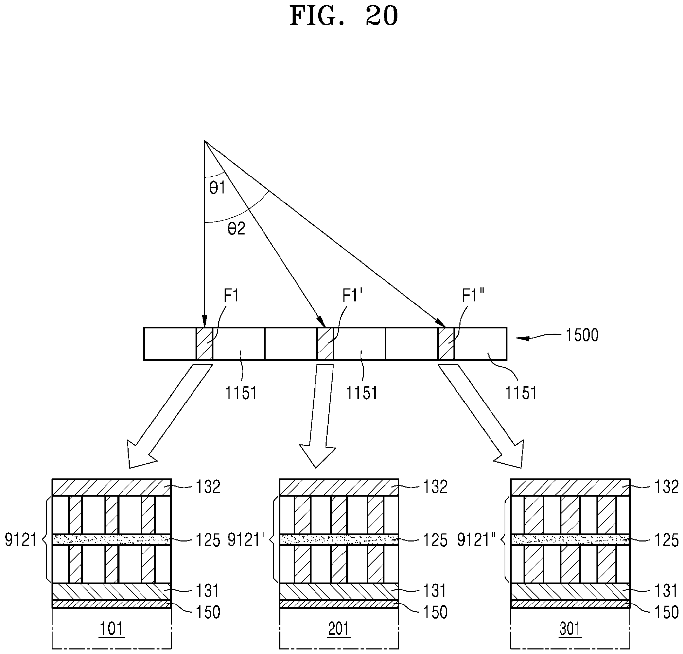

FIG. 19 is a plan view illustrating unit filters F1, F1', and F1" provided at different positions in a spectral filter 1500 according to an example embodiment. FIG. 20 is a cross-sectional view taken along line II-II' of FIG. 19. For convenience, only a plurality of second filter arrays 1151 are shown in FIGS. 19 and 20. Here, the plurality of second filter arrays 1151 correspond to the plurality of second filter arrays 1120. According to an example embodiment, among unit filters of each of the second filter arrays 1151 constituting the spectral filter 1500, the first unit filters F1, F1', and F1" having the same central wavelength and provided at different positions are described.

In FIGS. 19 and 20, L1 represents a circle connecting first positions where the CRA of the incident light is θ₁, and L2 represents a circle connecting second positions where the CRA of the incident light is θ₂ (>θ₁). F1 denotes the first unit filter at the center of the spectral filter 1500, F1' denotes the first unit filter at a first position where the CRA of the incident light is θ₁, F1" denotes the first unit filter at a second position where the CRA of the incident light is θ₂. Here, all of the first unit filters (F1, F1', and F1" provided at different positions may have the same central wavelength.

Referring to FIGS. 19 and 20, as described above, each of the first unit filters F1, F1', and F1" includes the first and second reflecting plates 131 and 132 spaced apart from each other, and the first cavities 9121, 9121', and 9121" provided between the first and second reflecting plates 131 and 132. Here, each of the first cavities 9121, 9121', and 9121" may include a first lower cavity layer, the intermediate light absorption layer 125, and a first upper cavity layer. The first and second reflecting plates 131 and 132 and the first cavities 9121, 9121' and 9121" have been described above, and thus, descriptions thereof are omitted. The pixels 101, 201, and 301 of the pixel array 4100 may be provided below the first reflecting plate 131, and the passivation layer 150 may be provided between the first reflecting plate 131 and the pixel array 4100.

According to an example embodiment, the effective refractive indices of the first cavities 9121, 9121', and 9121" (more specifically, the first lower cavity layer and the first upper cavity layer) may be adjusted according to the positions of the first unit filters F1, F1', and F1" so as to compensate for the central wavelength shift caused by the change in the CRA of the incident light.

The effective refractive indices of the first cavities 9121, 9121', and 9121" may be changed by changing patterns of the first cavities 9121, 9121', and 9121" according to the changed positions of the first unit filters F1, F1', and F1". Here, the effective refractive indices of the first cavities 9121, 9121', and 9121" may be adjusted to an extent of compensating for the central wavelength shift generated according to the CRA of the incident light. The positions of the first unit filters F1, F1', and F1" move from the center to the periphery of the spectral filter 9100, and thus, the CRA of the incident light may increase, and accordingly, the central wavelength shift effect may increase. Therefore, in order to compensate for the central wavelength shift, the patterns of the first cavities 9121, 9121', and 9121" may be formed such that sizes of the first cavities 9121, 9121', and 9121" may change according to the changed positions of the first unit filters F1, F1', and F1". Specifically, the patterns of the first cavities 9121, 9121', and 9121" may be formed such that sizes of the first cavities 9121, 9121', and 9121" may change as the positions of the first unit filters F1, F1', and F1" move from the center to the periphery of the spectral filter 9100.

As described above, in the example embodiment, the central wavelength shift caused by the change in the CRA of the incident light may be compensated for by changing the effective refractive indices of the first cavities 9121, 9121', and 9121" according to the changed positions of the first unit filters F1, F1', and F1", and accordingly, the first unit filters F1, F1', and F1" provided at different positions may all have the same central wavelength.

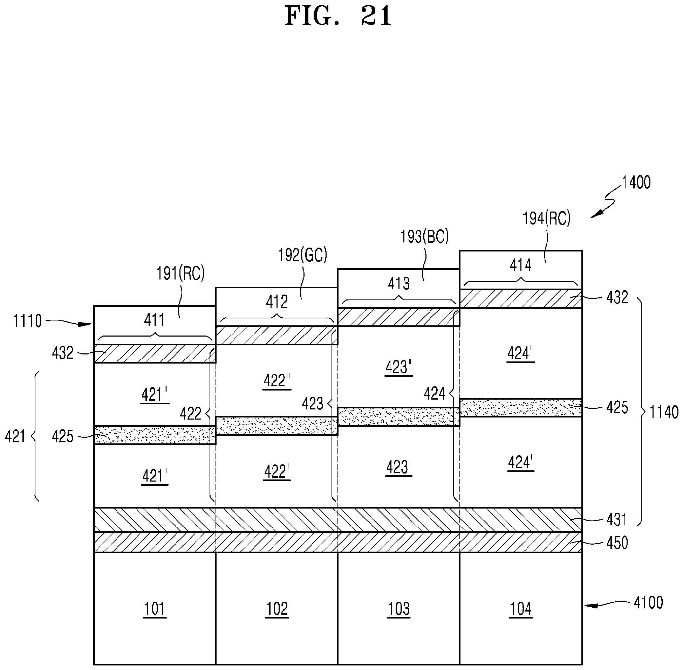

FIG. 21 is a cross-sectional view of a spectral filter 1400 according to another example embodiment. Hereinafter, differences between the example embodiment illustrated in FIG. 21 and the example embodiments described above are mainly described.

Referring to FIG. 21, the spectral filter 1400 includes a first filter array 1110 and a second filter array 1140 provided below the first filter array 1110. The first filter array 1110 includes the plurality of band filters 191, 192, 193, and 194 respectively transmitting light in a specific band. The first filter array 1110 may be, for example, a color filter array. FIG. 21 illustrates that the first, second, third, and fourth band filters 191, 192, 193, and 194 are the red, green, blue, and red color filters RC, GC, BC, and RC, respectively. The first filter array 1110 may be a wideband filter array.

The second filter array 1140 includes a plurality of unit filters 411, 412, 413, and 414. FIG. 21 illustrates the four first, second, third and fourth unit filters 411, 412, 413 and 414 constituting the second filter array 1140. Each of the unit filters 411, 412, 413, and 414 may have central wavelengths of different bands within a visible light wavelength region (e.g., a wavelength region of about 400 nm to about 700 nm).

The pixel array 4100 including a plurality of pixels 101, 102, 103, and 104 may be provided below the second filter array 1140. A passivation layer 450 may be provided between the second filter array 1140 and the pixel array 4100 to protect the pixel array 4100. FIG. 21 illustrates that the second filter array 1140 is provided below the first filter array 1110, but the second filter array 1140 may be provided above the first filter array 1110.

The first, second, third and fourth unit filters 411, 412, 413 and 414 include first and second reflecting plates 431 and 432 spaced apart from each other and first, second, third, and fourth cavities 421, 422, 423, and 424 provided between the first and second reflecting plates 431 and 432. Here, each of the first and second reflecting plates 431 and 432 may independently include a metal reflecting plate or a Bragg reflecting plate.

Each of the cavities 421, 422, 423, and 424 may have central wavelengths of different bands in a visible light region (a wavelength range of about 400 nm to about 700 nm). To this end, each of the cavities 121, 122, 123, and 124 may have a thickness of about 100 nm to about 2000 nm. For example, each of the cavities 121, 122, 123, and 124 may have a thickness of about 200 nm to about 1000 nm.

The cavities 421, 422, 423, and 424 may respectively include lower cavity layers 421', 422', 423', and 424', upper cavity layers 421", 422", 423", and 424" and an intermediate light absorption layer 425 provided between the lower cavity layers 421', 422', 423', and 424', and the upper cavity layers 421", 422", 423", and 424". Specifically, the first cavity 421 includes the first lower cavity layer 421', the intermediate light absorption layer 425, and the first upper cavity layer 421", and the second cavity 422 includes the second lower cavity layer 422', the intermediate light absorption layer 425, and the second upper cavity layer 422". The third cavity 423 includes the third lower cavity layer 423', the intermediate light absorption layer 425, and the third upper cavity layer 423", and the fourth cavity 424 includes the fourth lower cavity layer 424', the intermediate light absorption layer 425, and the fourth upper cavity layer 424".

The lower cavity layers 421', 422', 423', and 424' and the upper cavity layers 421", 422", 423", and 424" thereon may include the same dielectric material and have substantially the same thickness. Accordingly, the lower cavity layers 421', 422', 423', and 424' and the upper cavity layers 421", 422", 423", and 424" thereon may have the same optical path. In addition, the intermediate light absorption layer 425 may be positioned at an intermediate height of each of the cavities 421, 422, 423, and 424.

Each of the cavities 421, 422, 423, and 424 may adjust the optical path by changing its thickness (specifically, the thickness of each of the lower cavity layers 421', 422', 423', and 424' and the upper cavity layers 421", 422", 423", and 424"), and accordingly, the first, second, third, and fourth cavities 421, 422, 423, and 424 may be configured to have different central wavelengths. FIG. 21 illustrates that the thickness gradually increases from the first cavity 421 to the fourth cavity 424.

The intermediate light absorption layer 425 may be configured to absorb and remove a specific central wavelength. As described above, the intermediate light absorption layer 425 may absorb and remove a specific central wavelength among two or more central wavelengths generated by a combination of the lower cavity layers 421', 422', 423', and 424' and the upper cavity layers 421", 422", 423" and 424". The intermediate light absorption layer 425 may have a thickness of, for example, about 5 nm to about 80 nm, and may include, for example, a metal material including Ag, Au, Al, W, Ti, or TiN, or a dielectric material (e.g., Si) having a high light absorption rate of the visible light band.

Each of the cavities 421, 422, 423, and 424 may have central wavelengths within different bands by the intermediate light absorption layer 425, and may have one central wavelength for each band.

In the spectral filter 1400 according to an example embodiment, each of the band filters 191, 192, 193, and 194 of the first filter array 1110 may transmit light in a specific band, and each of the unit filters 411, 412, 413, and 414 of the second filter array 1140 may have central wavelengths of different bands. Accordingly, channels including a combination of the band filters 191, 192, 193, and 194 and the unit filters 411, 412, 413, and 414 may have different central wavelengths in a one-to-one correspondence with channels in the wavelength band of about 400 nm to about 700 nm.

Two or more of the cavities of the unit filters (e.g., F1 to F16 in FIG. 3B) constituting the second filter array 1140 may have the same thickness according to types of the band filters (e.g., C1 to C16 in FIG. 3A) constituting the first filter array 1110. A channel array having N channels may be configured by combining the band filters 191, 192, 193, and 194 of the first filter array 1110 and the unit filters 411, 412, 413, and 414 of the second filter array 1140. Here, when the number of types of band filters is A, number N' of cavities having different thicknesses may satisfy N/A ≤N'<N.

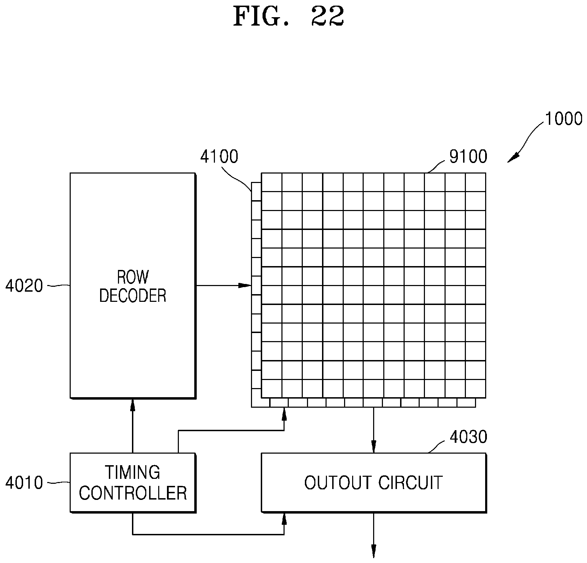

FIG. 22 is a block diagram of an image sensor according to an example embodiment.

Referring to FIG. 22, the image sensor 1000 may include a spectral filter 9100, a pixel array 4100, a timing controller 4010, a row decoder 4020, and an output circuit 4030. The image sensor 1000 may include a charge coupled device (CCD) image sensor or a complementary metal oxide semiconductor (CMOS) image sensor, but the disclosure is not limited thereto.

The spectral filter 9100 may be one of the spectral filters 1100 to 1600 mentioned in the embodiments described above. The pixel array 4100 may include a plurality of pixels that detect light of different wavelengths that transmitted through the unit filters. In detail, the pixel array 4100 may include pixels arranged in two dimensions along a plurality of rows and columns. The row decoder 4020 may select one of the rows of the pixel array 4100 in response to a row address signal output from the timing controller 4010. The output circuit 4030 may output a light detection signal in units of columns from the pixels arranged in a selected row. To this end, the output circuit 4030 may include a column decoder and an analog to digital converter (ADC). For example, the output circuit 4030 may include a plurality of ADCs arranged for each column between the column decoder and the pixel array 4100, or a single ADC arranged at an output end of the column decoder. The timing controller 4010, the row decoder 4020, and the output circuit 4030 may be implemented by a single chip or separate chips. A processor for processing an image signal output through the output circuit 4030 may be implemented by a single chip with the timing controller 4010, the row decoder 4020, and the output circuit 4030. The pixel array 4100 may include a plurality of pixels that detect light of different wavelengths, and the pixels may be arranged in various methods.

The image sensor 1000 including the spectral filters 1100 to 1600 described above may be employed in various high performance optical devices or high performance electronic devices. The electronic devices may include, for example, smart phones, mobile phones, cellular phones, personal digital assistants (PDAs), laptop computers, personal computers (PCs), various portable devices, home appliances, security cameras, medical cameras, automobiles, Internet of Things (IoT) devices, and other mobile or no-mobile computing devise, but the disclosure is not limited thereto.

The electronic devices may further include, in addition to the image sensor 1000, a processor for controlling an image sensor, for example, an application processor (AP), control a number of hardware or software constituent elements by driving operating systems or application programs through the processor, and perform various data processing and calculations. The processors may further include graphics processing units (GPUs) and/or image signal processors. When the processors include image signal processors, an image (or video) obtained through an image sensor may be stored and/or output using the processor.

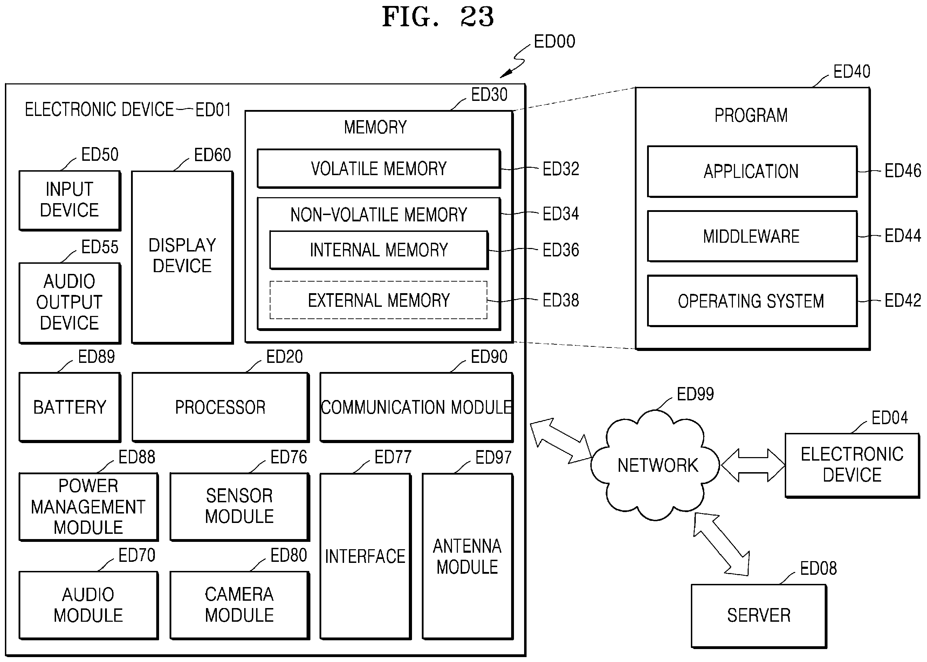

FIG. 23 is a schematic block diagram of an electronic device including an image sensor, according to some embodiments.

Referring to FIG. 23, in a network environment ED00, an electronic device ED01 may communicate with another electronic device ED02 or communicate with a server ED08. The electronic device ED01 may include a processor ED20, a memory ED30, an input device ED50, an audio output device ED55, a display device ED60, an audio module ED70, a sensor module ED76, an interface ED77, a haptic module ED79, a camera module ED80, a power management module ED88, a battery ED89, a communication module ED90, and/or an antenna module ED97. In the electronic device ED01, some (the display device ED60, etc.) of constituent elements may be omitted or other constituent elements may be added. Some of the constituent elements may be implemented by one integrated circuit. For example, the sensor module ED76 (a fingerprint sensor, an iris sensor, an illuminance sensor, etc.) may be implemented by being embedded in the display device ED60 (a display, etc.) Furthermore, when the image sensor 1000 includes a spectral function, some functions (a color sensor and an illuminance sensor) of the sensor module ED76 may be implemented by the image sensor 1000, not by a separate sensor module.

The processor ED20 may control one or a plurality of other constituent elements (hardware and software constituent elements, etc.) of the electronic device ED01 connected to the processor ED20 by executing software (a program ED40, etc.), and perform various data processing or calculations. As part of the data processing or calculations, the processor ED20 may load, in a volatile memory ED32, commands and/or data received from other constituent elements (the sensor module ED76, the communication module ED90, etc.), process the command and/or data stored in the volatile memory ED32, and store result data in a non-volatile memory ED34.

The memory ED30 may store various data needed by the constituent elements (the processor ED20, the sensor module ED76, etc.) of the electronic device ED01. The data may include, for example, software (the program ED40, etc.) and input data and/or output data about commands related thereto. The memory ED30 may include the volatile memory ED32 and/or the non-volatile memory ED34. The non-volatile memory ED34 may include an internal memory ED36 fixedly installed in the electronic device ED01 and an external memory ED38 that is removable.

The program ED40 may be stored in the memory ED30 as software, and may include an operating system ED42, middleware ED44, and/or an application ED46. The camera module ED80 may capture a still image and a video. The camera module ED80 may include a lens assembly including one or a plurality of lenses, the image sensor 1000 of FIG. 1, image signal processors, and/or flashes. The lens assembly included in the camera module ED80 may collect light emitted from a subject for image capturing.

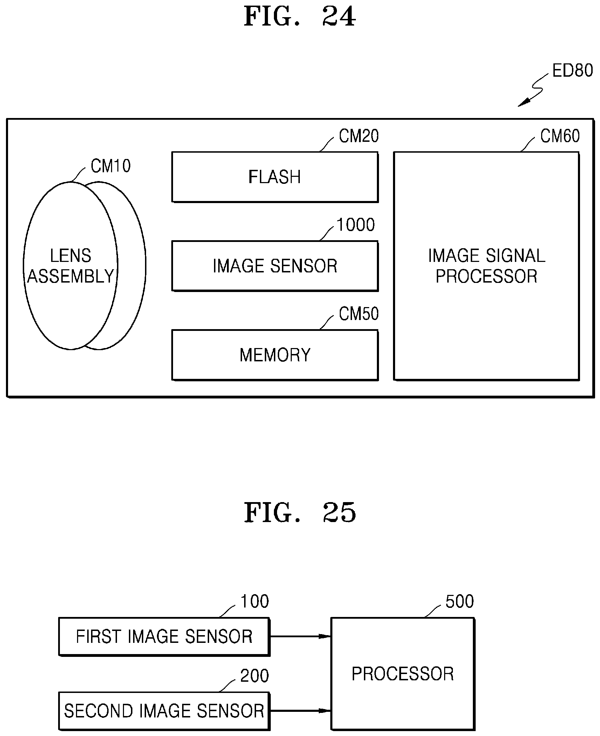

FIG. 24 is a schematic block diagram of the camera module ED80 of FIG. 23.

Referring to FIG. 25, the camera module ED80 may include a lens assembly CM10, a flash CM20, the image sensor 1000 (the image sensor 1000 of FIG. 22, etc.), a memory CM50 (a buffer memory, etc.), and/or an image signal processor CM60. The lens assembly CM10 may collect light emitted from a subject for image capturing. The camera module ED80 may include a plurality of lens assemblies CM10, and in this case, the camera module ED80 may include a dual camera, a 360 degrees camera, or a spherical camera. Some of the lens assemblies CM10 may have the same lens attributes (a viewing angle, a focal length, auto focus, F Number, optical zoom, etc.), or different lens attributes. The lens assembly CM10 may include a wide angle lens or a telescopic lens. A dual or multi-camera module may have a combination of different attributes of a filter array.

The flash CM20 may emit light used to reinforce light emitted or reflected from a subject. The flash CM20 may include one or a plurality of light-emitting diodes (a red-green-blue (RGB) LED, a white LED, an infrared LED, an ultraviolet LED, etc.), and/or a xenon lamp. The image sensor 1000 may include the image sensor of FIG. 1, and convert light emitted or reflected from the subject and transmitted through the lens assembly CM10 into electrical signals, thereby obtaining an image corresponding to the subject. The image sensor 1000 may include one or a plurality of sensors selected from image sensors having different attributes such as an RGB sensor, a black and white (BW) sensor, an IR sensor, or UV sensor. Each sensor included in the image sensor 1000 may be implemented by a charged coupled device (CCD) sensor and/or a complementary metal oxide semiconductor (CMOS) sensor.

The memory CM50 may store a part or entire data of an image obtained through the image sensor 1000 for a subsequent image processing operation. For example, when a plurality of images are obtained at high speed, only low resolution images are displayed while the obtained original data (Bayer-Patterned data, high resolution data, etc.) is stored in the memory CM50. Then, the memory CM50 may be used to transmit the original data of a selected (user selection, etc.) image to the image signal processor CM60. The memory CM50 may be incorporated into the memory ED30 of the electronic device ED01, or configured to be an independently operated separate memory.

The image signal processor CM60 may perform image processing on the image obtained through the image sensor 1000 or the image data stored in the memory CM50. The image processing may include depth map generation, three-dimensional modeling, panorama generation, feature point extraction, image synthesis, and/or image compensation (noise reduction, resolution adjustment, brightness adjustment, blurring, sharpening, softening, etc.) The image signal processor CM60 may perform control (exposure time control, or read-out timing control, etc.) on constituent elements (the image sensor 1000, etc.) included in the camera module ED80. The image processed by the image signal processor CM60 may be stored again in the memory CM50 for additional processing or provided to external constituent elements (the memory ED30, the display device ED60, the electronic device ED02, the electronic device ED04, the server ED08, and the like) of the camera module ED80. The image signal processor CM60 may be incorporated into the processor ED20, or configured to be a separate processor operated independently of the processor ED20. When the image signal processor CM60 is configured by a separate processor from the processor ED20, the image processed by the image signal processor CM60 may undergo additional image processing by the processor ED20 and then displayed through the display device ED60.

Referring back to FIG. 23, the electronic device ED01 may include a plurality of camera modules ED80 having different attributes or functions. In this case, one of the camera modules ED80 may be a wide angle camera, and another may be a telescopic camera. Similarly, one of the camera modules ED80 may be a front side camera, and another may be a read side camera. In addition, the camera module ED80 may be a combined camera module in which an image sensor including an existing RGB three-color filter and a spectral image sensor including a spectral filter are combined and data of the combined two image sensors is integrated and processed.

FIG. 25 is a block diagram showing a schematic structure of a composite camera module including a plurality of image sensors having different attributes. Here, a first image sensor 100 may be an existing RGB image sensor, and a second image sensor 200 may be a multispectral image (MSI) sensor.

In this case, the RGB image sensor may be a CMOS image sensor. The RGB sensor may generate images of three channels by sensing spectrums representing R, G, and B using a Bayer color filter array. Also, the RGB sensor may use other types of color filter arrays. The MSI sensor senses and displays light of a different wavelength than the RGB image sensor. The MSI sensor has a larger number of channels to sense light of more types of wavelengths.

The processor 500 may process image information obtained from each of the image sensors 100 and 200 and combine data in a desired method to improve image quality or performance of identifying an object in an image.

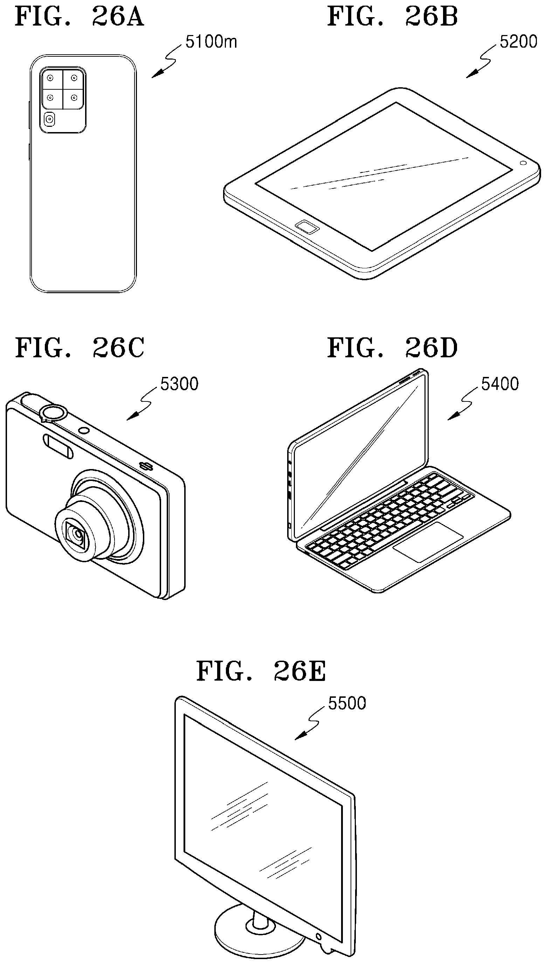

The image sensor 1000 according to embodiments may be applied to a mobile phone or smartphone 5100m illustrated in FIG. 26A, a tablet or smart tablet 5200 illustrated in FIG. 26B, a digital camera or camcorder 5300 illustrated in FIG. 26C, a notebook computer 5400 illustrated in FIG. 26D, a television or smart television 5500 illustrated in FIG. 26E. For example, the smartphone 5100m or the smart tablet 5200 may include a plurality of high resolution cameras, each having a high resolution image sensor mounted thereon. Depth information of subjects in an image may be extracted by using a high resolution cameras, out focusing of the image may be adjusted, or subjects in the image may be automatically identified.

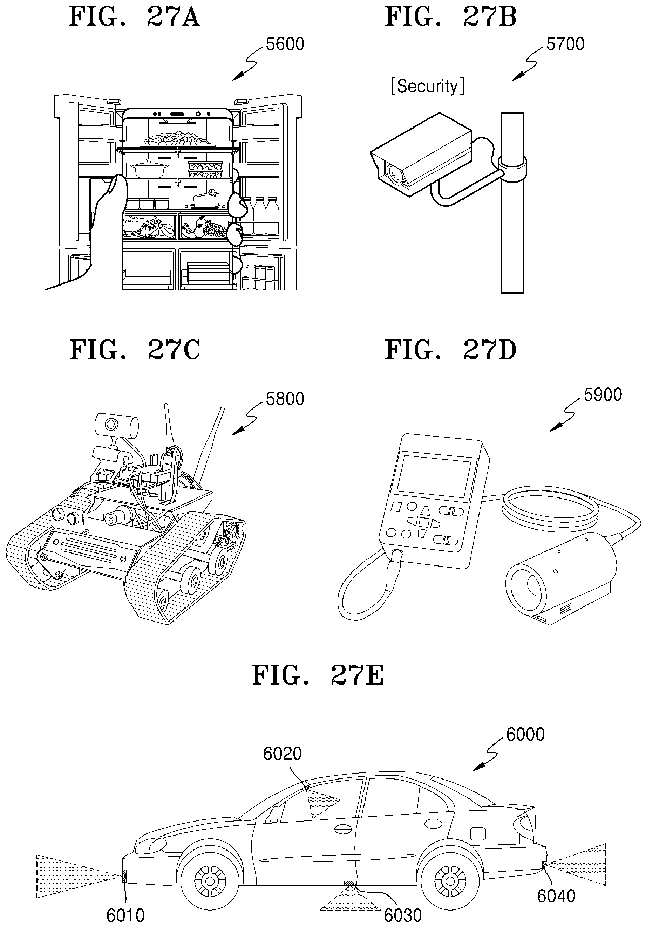

However, the disclosure is not limited thereto, and as such, according various other example embodiments, the image sensor 1000 may be provided in other electronic devise. For example, the image sensor 1000 may be applied to a smart refrigerator 5600 illustrated FIG. 27A, a security camera 5700 illustrated in FIG. 27B, a robot 5800 illustrated in FIG. 27C, or a medical camera 5900 illustrated in FIG. 27D. For example, the smart refrigerator 5600 may automatically recognize food in a refrigerator, by using an image sensor, and notify a user of the presence of a particular food, the type of food that is input or output, and the like, through a smartphone. The security camera 5700 may provide an ultrahigh resolution image and may recognize an object or a person in an image in a dark environment by using high sensitivity. The robot 5800 may be provided in a disaster or industrial site that is not directly accessible by people, and may provide a high resolution image. The medical camera 5900 may provide a high resolution image for diagnosis or surgery, and thus a field of vision may be dynamically adjusted.

Furthermore, the image sensor 1000 may be applied to a vehicle 6000 as illustrated in FIG. 27E. The vehicle 6000 may include a plurality of vehicle cameras 6010, 6020, 6030, and 6040 arranged at various positions. Each of the vehicle cameras 6010, 6020, 6030, and 6040 may include an image sensor according to an example embodiment. The vehicle 6000 may provide a driver with various pieces of information about the inside or periphery of the vehicle 6000, by using the vehicle cameras 6010, 6020, 6030, and 6040, thereby providing an object or a person in an image may be automatically recognized and information needed for autonomous driving.

Although the image sensor including the above-described spectral filter and the electronic device including the image sensor have been described with reference to the embodiment shown in the drawings, this is only an example, and it will be understood by those of ordinary skill in the art that various modifications and other equivalent embodiments therefrom are possible.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims.

## Claims

1. A spectral filter comprising:
a plurality of first filter arrays, each of the plurality of first filter arrays comprising a plurality of band filters; and
a plurality of second filter arrays provided on the plurality of first filter arrays, each of the plurality of second filter arrays comprising a plurality of unit filters corresponding to the plurality of band filters;
wherein the plurality of unit filters comprises:
a first reflecting plate;
a second reflecting plate spaced apart from the first reflecting plate; and
a plurality of cavities provided between the first reflecting plate and second reflecting plate, each of the plurality of cavities having central wavelengths of different wavelength bands among a plurality of wavelength bands,
wherein each of the plurality of cavities comprises a lower cavity layer, a upper cavity layer, and an intermediate light absorption layer provided between the lower cavity layer and the upper cavity layer,
wherein each of the plurality of band filters is configured to transmit light in a respective wavelength band, among the plurality of wavelength bands, and
wherein two or more of the plurality of cavities are configured to have a same effective refractive index.

2. The spectral filter of claim 1, wherein each of the plurality of cavities is configured to have the central wavelengths of the different wavelength bands in a wavelength range of 400 nm to 700 nm and/or
wherein each of the plurality of cavities has a thickness of 100 nm to 2,000 nm.

3. The spectral filter of claim 1 or 2, wherein the intermediate light absorption layer is configured to absorb a specific central wavelength among a plurality of central wavelengths generated by a combination of the lower cavity layer and the upper cavity layer.

4. The spectral filter of any of the preceding claims, wherein the intermediate light absorption layer is positioned at an intermediate height of each of the plurality of cavities and/or
wherein the intermediate light absorption layer comprises a metal material or a dielectric material configured to absorb light in a visible light band.

5. The spectral filter of any of the preceding claim, wherein the intermediate light absorption layer has a thickness of 5 nm to 80 nm.

6. The spectral filter of any of the preceding claims, wherein at least one of the first filter arrays comprises a color filter array or a broadband filter array.

7. The spectral filter of any of the preceding claims, wherein the plurality of cavities have a same thickness.

8. The spectral filter of any of the preceding claims, wherein two or more of the plurality of cavities comprise a same dielectric pattern.

9. The spectral filter of any of the preceding claims, wherein a channel array having N channels is configured by combining one or more of the plurality of band filters of one of the first filter arrays and one or more of the plurality of unit filters of one of the second filter arrays, and when a number of band filters of different types is A, a number N' of cavities having different effective refractive indices satisfies N/A ≤N'<N.

10. The spectral filter of any of the preceding claims, wherein each of the first reflecting plate and the second reflecting plate comprises a metal reflecting plate or a Bragg reflecting plate.

11. The spectral filter of any of the preceding claims, wherein two or more unit filters, among the plurality of unit filters, having a same central wavelength are configured such that effective refractive indices of the plurality of cavities change according to positions of the two or more unit filters so as to compensate for a central wavelength shift caused by a change in a chief ray angle (CRA) of an incident light.

12. The spectral filter of any of the preceding claims, further comprising an etch stop layer provided on the intermediate light absorption layer.

13. An image sensor comprising:
a pixel array comprising a plurality of pixels; and
a spectral filter provided on the pixel array,
wherein the spectral filter is according to any of the preceding claims.

14. The image sensor of claim 13, wherein the pixel array comprises a plurality of pixels, each of the plurality of pixels comprising a wiring layer including a driving circuit and a photodiode provided on the wiring layer.

15. An electronic device comprising the image sensor of claim 13 or 14.
